# EUROPÄISCHE PATENTSCHRIFT

(11) **EP 3 176 730 B1**
(45) Veröffentlichungstag und Bekanntmachung des Hinweises auf die Patenterteilung: **24.01.2024**
(21) Anmeldenummer: 16198774.8
(22) Anmeldetag: 15.11.2016
(51) Int. Cl.: G06V 10/141

(54) **BELEUCHTUNG FÜR INDUSTRIELLE BILDVERARBEITUNG**
ILLUMINATION FOR INDUSTRIAL IMAGE PROCESSING
ÉCLAIRAGE POUR LE TRAITEMENT INDUSTRIEL DE L'IMAGE

(30) Priorität: 01.12.2015 AT 510302015
(43) Veröffentlichungstag der Anmeldung: 07.06.2017
(73) Patentinhaber: B&R Industrial Automation GmbH, 5142 Eggelsberg (AT)
(72) Erfinder: Waldl, Andreas, 5142 Eggelsberg (AT)
(74) Vertreter: Patentanwälte Pinter & Weiss OG

(56) Entgegenhaltungen:
- US-A1- 2007 014 567
- US-A1- 2011 037 840

## Beschreibung

Die vorliegende Erfindung befasst sich mit einer Lichtquelle für die industrielle Bildverarbeitung zum Beleuchten eines Bildbereichs.

Gerade in der industriellen Bildverarbeitung ist die Bewertung von Messobjekten anhand aufgenommener Bilddaten hinreichend bekannt. In diesem Zusammenhang wird eine genutzte Bildverarbeitungseinrichtung auch als "Machine Vision System" bezeichnet. Machine Vision Systeme, bzw. die industrielle Bildverarbeitung, werden hauptsächlich in automatisierten Fertigungs- und Produktionsprozessen, zur Überwachung, Qualitätsprüfung und Prozess-Steuerung eingesetzt. Sie stellen dabei eine wirtschaftliche Methode der automatisierten optischen Prüfung und Steuerung dar.

Eine industrielle Bildverarbeitung umfasst üblicherweise die Ausleuchtung eines vordefinierten Bildbereiches oder eines Objektes, die bildliche Aufnahme mittels einer Kamera und die Verarbeitung und Analyse des aufgezeichneten Bildes, beziehungsweise die Weitergabe des Ergebnisses an eine Kontrolleinheit.

Sinn und Zweck der Anwendung von industrieller Bildverarbeitung ist beispielsweise die Objekt- und Lageerkennung, Vollständigkeitsprüfung, Vermessungsaufgaben und das Wahrnehmen von Inspektionsaufgaben. Auch die Oberflächenprüfung ist ebenfalls ein Bereich, welcher durch die industrielle Bildverarbeitung abgedeckt werden kann. Das Sortieren und das damit verbundene Handhaben der Objekte, beispielsweise im Versandwesen, ist ebenso ein Anwendungsbereich solcher Systeme.

Die Implementierung der industriellen Bildverarbeitung in eine Produktion bedarf üblicherweise sorgfältiger Planung. Die Auswahl der Komponenten muss dabei sehr genau auf die Anforderungen der jeweiligen Anwendung abgestimmt werden. Bei unterschiedlichen Aufgaben bedarf es unterschiedliche Leistungsmerkmale des genutzten Bildverarbeitungssystems. Inspektionsverfahren erfordern die Fähigkeit, Objekte bzw. Details zu erkennen, eine erstellte Abbildung auswerten zu können und darauf basierend zu entscheiden, ob beispielsweise ein Produktfehler vorliegt. Bei der Produktmontage oder bei der Prozesssteuerung ist dagegen die Fähigkeit gefragt, in einem Bild beispielsweise vordefinierte Referenzmarkierungen zu erkennen, die dann für die Platzierung und Ausrichtung von Bauteilen oder zur Steuerung von Produktionsprozessen verwendet werden. Mithilfe der industriellen Bildverarbeitung kann somit eine Klassifikation, bzw. Entscheidung für das weitere Handhaben eines Objektes innerhalb eines Fertigungs- oder Produktionsschrittes gesteuert werden.

Insbesondere bei der eben erwähnten Klassifikation ist es erforderlich, sicherzustellen, dass ein Objekt bzw. Messobjekt so erkannt wird, dass die entsprechende Entscheidung auch tatsächlich "richtig" getroffen werden kann.

In nachvollziehbarer Weise, spielt die entsprechende Beleuchtung des Messobjektes bzw. jenes Bereichs in welchem das Messobjekt erkannt werden soll, eine entscheidende Rolle für die zuvor erwähnte Klassifikation.

Um eine optimale Beleuchtung zu ermöglichen sieht beispielsweise die DE 196 53 234 B4 einen Oberflächenbeleuchter vor, welcher es durch selektive Ansteuerung unterschiedlich positionierter Leuchtkörper ermöglicht, ein Messobjekt optimal zu beleuchten.

Jedoch ist für die optimale Beleuchtung auch sicherzustellen, dass die Lichtquelle für die industrielle Bildverarbeitung entsprechend ihrer zu erfüllenden Aufgabe positioniert ist. Bei der Änderungen der Position der Lichtquelle können sich daraus, in nachvollziehbarer Weise, entsprechende Abweichungen bzw. Messfehler ergeben, beispielsweise durch Schattenbildung, unerwünschten Reflexionen, zu hoher Beleuchtungsintensität am Messobjekt. Zu derartigen Änderungen in der Position der Lichtquelle, bzw. anderer Komponenten, kann es beispielsweise durch unsachgemäße Service- oder Reinigungsarbeiten, unabsichtliches Verstellen, oder auch durch Sabotage oder dergleichen kommen.

Um ein entsprechendes Positionieren zu ermöglichen, bzw. um ein Einhalten einer Position zu gewährleisten, können beispielsweise geeignete starre mechanische Vorrichtungen vorgesehen werden, die gezielt eine einzige, entsprechend genaue Einbaulage ermöglichen. Eine derartige Festlegung der Einbaulage ist jedoch häufig nicht gewünscht, da bei Änderung in der Produktion, beispielsweise des zu klassifizierenden Messobjekts, üblicherweise auch Änderungen an der industriellen Bildverarbeitung bzw. der Lichtquelle vorgenommen werden müssen. Ein neues Positionieren ist dabei oftmals aufwändig und schränkt die Flexibilität des industriellen Bildverarbeitungssystems erheblich ein. Weiters ist eine tatsächlich ordnungsgemäße neuerliche Positionierung nicht zwangsläufig gegeben, was wiederum zu den bereits erwähnten Nachteilen führt.

Die US 2011/037840 A1 und die US 2007/014567 A1 offenbaren in ähnlicher Weise Lampen zur Beleuchtung von medizinischen Operationsbereichen. Die Lampen können dabei mittels einer Steuerungseinrichtung und den entsprechenden Aktuatoren so angesteuert werden, dass ihre Position verändert werden kann, sodass sie ein Referenzobjekt optimal (ohne Schatten) beleuchten. Das Referenzobjekt kann z.B. ein chirurgisches Werkzeug, ein spezieller Handschuh oder ein Armband sein. Die Lampen folgen den Bewegungen eines Referenzobjekts, um es optimal zu beleuchten. Im industriellen Bereich sind diese Lampen aber nicht zweckmäßig, da keine reproduzierbare Positionierung der Lichtquelle auf einen vorgegebenen Punkt möglich ist.

Die Aufgabe der vorliegenden Erfindung liegt darin, die reproduzierbare Positionierung der Lichtquelle für die industrielle Bildverarbeitung sicherzustellen.

Diese Aufgabe wird erfindungsgemäß dadurch gelöst, dass die Lichtquelle zumindest einen Sensor aufweist und der zumindest eine Sensor zur Erfassung einer tatsächlichen relativen Lage der Lichtquelle in Bezug auf zumindest einen vorgegebenen ortsfesten Referenzpunkt und/oder zumindest einer vorgegebenen ortsfesten Referenzebene vorgesehen ist und, dass eine mit Sensor verbundene Vergleichseinheit zum Vergleich der tatsächlichen relativen Lage der Lichtquelle mit einer vorgegebenen relativen Solllage vorgesehen ist. Dies erlaubt es die Lage einer Lichtquelle für die industrielle Bildverarbeitung in Bezug zu einer Referenzebene zu detektieren. Der Vergleich zwischen der vorgegebenen relativen Solllage und der tatsächlichen relativen Lage der Lichtquelle erlaubt es, je nach Vergleichsergebnis, unterschiedlichste Handlungen zu setzen und insbesondere auch die korrekte Positionierung der Lichtquelle für die industrielle Bildverarbeitung reproduzierbar sicherzustellen.

Vorteilhaft ist vorgesehen, dass der Sensor zumindest einen Ausrichtungssensor mit einer vorgegebenen Referenzausrichtung umfasst, der Ausrichtungssensor zur Erfassung einer tatsächlichen Ausrichtung in Bezug auf die Referenzausrichtung ausgebildet ist, und dass die Vergleichseinheit zum Vergleich der tatsächlichen Ausrichtung mit einer vorgegebenen Sollausrichtung bezogen auf die Referenzausrichtung vorgesehen ist. Dies erlaubt es als Lageinformation die Ausrichtung der Lichtquelle im Raum zu detektieren. Der Vergleich zwischen der vorgegebenen Ausrichtung und der tatsächlichen Ausrichtung erlaubt es wieder, je nach Vergleichsergebnis, unterschiedlichste Handlungen zu setzen.

Vorteilhaft ist vorgesehen, dass der Sensor zumindest einen Abstandssensor umfasst und der Abstandssensor zur Erfassung zumindest eines tatsächlichen Abstands zu dem zumindest einen vorgegebenen ortsfesten Referenzpunkt und/oder der zumindest einen vorgegebenen ortsfesten Referenzebene vorgesehen ist und dass die Vergleichseinheit zum Vergleich des tatsächlichen Abstandes mit einem vorgegebenen Sollabstand zum ortsfesten Referenzpunkt und/oder der ortsfesten Referenzebene vorgesehen ist. Der Vergleich zwischen der vorgegebenen Ausrichtung und der tatsächlichen Ausrichtung erlaubt es wieder, je nach Vergleichsergebnis, unterschiedlichste Handlungen zu setzen.

Vorteilhaft ist vorgesehen, dass sich im bestimmungsgemäßen Gebrauch ein Messobjekt im Bildbereich befindet und zumindest ein Teil dessen Oberfläche als ortsfeste Referenzebene vorgesehen ist. Dies erlaubt es den Abstand der Lichtquelle zu einer Oberfläche eines Messobjekts, welches mithilfe der industriellen Bildverarbeitung bewertet werden soll, zu erfassen. Dadurch wird wiederum eine reproduzierbare Positionierung der Lichtquelle in Bezug auf das Messobjekt ermöglicht.

Vorteilhaft ist weiters vorgesehen, dass eine mit der Vergleichseinheit verbundene Ausgabeeinheit, zur Ausgabe eines Vergleichsergebnisses vorgesehen ist. Ein somit ausgegebenes Vergleichsergebnis kann nun für unterschiedlichste Zwecke genutzt werden. Das Vergleichsergebnis kann dazu auch die Information über eine Abweichung der tatsächlichen Ausrichtung, bzw. des tatsächlichen Abstandes der Lichtquelle zur Referenzebene, zu den entsprechenden Sollwerten enthalten, was insbesondere auch eine automatisierte Positionierung der Lichtquelle ermöglicht.

Vorteilhaft ist auch vorgesehen, dass mit der Lichtquelle eine Kamera zur industriellen Bildverarbeitung verbunden ist. Die bereits genannten Vorteile der Erfassung von Lage, bzw. Ausrichtung und Abstand der Lichtquelle zu einem Punkt auf einer Referenzebene kommen auf diese Weise auch für eine, zur industriellen Bildverarbeitung genutzten Kamera zum tragen.

Vorteilhaft ist weiters vorgesehen, dass zur räumlichen Positionierung der Lichtquelle in Abhängigkeit des Vergleichsergebnisses eine mit der Lichtquelle verbundene Positioniereinheit vorgesehen ist. Dies erlaubt es auf einfache Weise entsprechende Abweichungen zwischen der tatsächlichen relativen Lage und der vorgegebenen Solllage, bzw. den entsprechenden Ausrichtungen Ausrichtung oder Abständen der Lichtquelle zur Referenzebene bzw. einem Referenzpunkt, auszugleichen bzw. eine neue Positionierung und Justage der Lichtquelle vorzunehmen.

Auch kann in Bezug auf die zuvor erwähnte Kamera in vorteilhafter Weise eine Kompensationseinheit zur Manipulation der von der Kamera generierten Bilddaten zumindest in Abhängigkeit des Vergleichsergebnisses vorgesehen sein. Dies erlaubt es, abhängig von einer möglichen Differenz zwischen tatsächlicher Lage, Ausrichtung und/oder Position der Kamera und den zugehörigen Sollwerten, die von der Kamera generierten Bilddaten entsprechend anzupassen bzw. zu korrigieren.

Im Weiteren wird die Aufgabe, die Lichtquelle für die industrielle Bildverarbeitung möglichst reproduzierbar zu positionieren durch ein entsprechendes Verfahren gelöst. Im Zuge dieses Verfahrens ist vorgesehen, die bereits erwähnte Lichtquelle, gegebenenfalls in seinen vorteilhaften Ausgestaltungen, entsprechend zu nutzen.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 die Lichtquelle, allgemein im Raum positioniert,
Fig.2 die Lichtquelle in einer vorteilhaften Ausgestaltung, allgemein im Raum positioniert,
Fig.3 die Lichtquelle in einer besonders vorteilhaften Position,
Fig.4 eine vorteilhafte Kombination der Lichtquelle mit einer Kamera.

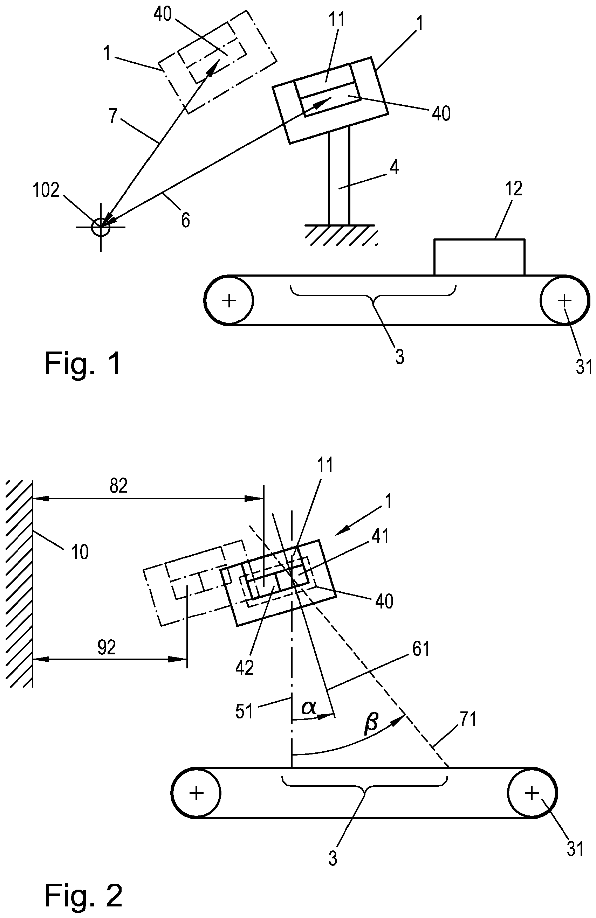

Fig.1 zeigt in schematischer Weise eine Lichtquelle 1, wie sie für die industrielle Bildverarbeitung zum Beleuchten eines Bildbereichs 3 genutzt wird. Beispielsweise befindet sich der eben erwähnte Bildbereich 3 auf einem Bandförderer 31, auf welchem innerhalb eines automatisierten Fertigungs- und Produktionsprozess, Messobjekte 12, beispielsweise im Zuge der Qualitätsprüfung, beleuchtet werden. Der Bildbereich 3 wird daher beispielsweise durch eine Ebene auf dem Bandförderer 31 oder auch auf einem Messobjekt 12 selbst, gebildet.

Erfindungsgemäß weist die dazu genutzte Lichtquelle 1 zumindest einen Sensor 40 auf. Der zumindest eine Sensor 40 dient zur Erfassung einer tatsächlichen relativen Lage 6 der Lichtquelle 1 in Bezug auf zumindest einen vorgegebenen Referenzpunkt 102 und/oder zumindest einer vorgegebenen Referenzebene 10 (Fig.2). Eine mit dem Sensor 40 verbundene Vergleichseinheit 11 ist zum Vergleich der tatsächlichen relativen Lage 6 der Lichtquelle 1 mit einer vorgegebenen relativen Solllage 7 vorgesehen. Je nach genutzter Montagevorrichtung 4, an welcher die Lichtquelle 1 befestigt ist, kann sich eine unterschiedliche Anzahl an möglichen Freiheitsgraden für die Bewegung der Lichtquelle 1 im Raum ergeben. Die Montagevorrichtung 4 kann dabei einen bis sechs Freiheitsgrade für die Bewegung der Lichtquelle 1 ermöglichen. Die Verwendung des oben genannten, zumindest einen Sensors 40, erlaubt es, die Lage der Lichtquelle 1 für die industrielle Bildverarbeitung in Bezug zu einem vorgegebenen Referenzpunkt 102 oder auch einer vorgegebenen Referenzebene 10 zu detektieren. Der Vergleich zwischen der vorgegebenen relativen Solllage 7 und der tatsächlichen relativen Lage 6 der Lichtquelle 1 erlaubt es, je nach Vergleichsergebnis, unterschiedlichste Handlungen zu setzen. Lediglich schematisch ist in Figur 1 die vorgegebene relative Solllage 7 der Lichtquelle strichliert angedeutet und die Lage lediglich auf einen Referenzpunkt 102 bezogen.

Für den Sensor 40 können eine Vielzahl bekannter Sensoren vorteilhaft genutzt werden, welche in unterschiedlichsten Varianten hinlänglich bekannt sind und aus diesem Grund an dieser Stelle nicht näher beschrieben werden. Die Auswahl richtet sich dabei in erster Linie nach den möglichen Freiheitsgraden die die Montagevorrichtung 4 zulässt. Dabei ist nachvollziehbar, dass die Vorteile der reproduzierbaren Positionierung mithilfe des Sensors 40 umso stärker zum tragen kommen, umso mehr Freiheitsgrade die genutzte Montagevorrichtung aufweist.

In Fig.2, welche bereits eine vorteilhafte Ausgestaltung aber ohne Montagevorrichtung 4 zeigt, ist erkennbar, dass der Sensor 40 beispielsweise zumindest einen Ausrichtungssensor 41 mit einer vorgegebenen Referenzausrichtung 51 umfassen kann. Dabei ist der Ausrichtungssensor 41 zur Erfassung einer tatsächlichen Ausrichtung 61 in Bezug auf die Referenzausrichtung 51 ausgebildet. Wiederum kann eine mit dem Ausrichtungssensor 41 verbundene Vergleichseinheit 11 zum Vergleich der tatsächlichen Ausrichtung 61 mit einer vorgegebenen Sollausrichtung 71 auf die Referenzausrichtung 51 genutzt werden.

Die eben erwähnte Referenzausrichtung 51 ist als Referenzorientierung des Ausrichtungssensors 41 im Raum zu verstehen, wobei diese auch als Nulllage bezeichnet werden kann.

Nulllage deshalb, da, wenn sich der Ausrichtungssensor 41 in der Referenzausrichtung 51 befindet, also die tatsächlichen Ausrichtung 61 gleich der Referenzausrichtung 51 ist, ein Abweichungswinkel α gleich Null ist. In Fig.2 ist eine tatsächliche Ausrichtung 61 des Ausrichtungssensors 41, bzw. der damit verbundenen Lichtquelle 1, da der Sensor 40 bezogen auf die Lichtquelle 1 ortsfest verbaut ist, dargestellt, bei welcher ein Abweichungswinkel α von ungleich Null erkennbar ist. Natürlich ist dabei zu beachten, dass sich, je nach vorgesehener Montagevorrichtung 4 für die Lichtquelle 1 bis zu drei Rotationsfreiheitsgrade im Raum ergeben können. Ist die Lichtquelle 1 auch translatorisch beweglich angeordnet, also beispielsweise nicht nur an einem Dreh- bzw. Kugelgelenk, sondern zusätzlich an einem Schienensystem befestigt, ergeben sich zusätzlich zu den eben erwähnten Rotationsfreiheitsgraden, weitere translatorische Freiheitsgrade, was somit in bekannter Weise zu bis zu sechs Freiheitsgraden führen kann.

Fig.2 zeigt weiters bereits besonders vorteilhaft, dass der Sensor 40 zumindest einen Abstandssensor 42 umfasst, wobei der Abstandssensor 42 zur Erfassung zumindest eines tatsächlichen Abstands 82 zu dem zumindest einen vorgegebenen Referenzpunkt 102 und/oder der zumindest einen vorgegebenen Referenzebene 10 vorgesehen ist. Der Abstandssensor 42 kann zusätzlich oder alternativ zum Ausrichtungssensor 41 vorgesehen sein. Weiters ist der zumindest eine Abstandssensor 42 zum Vergleich des tatsächlichen Abstandes 82 mit einem vorgegebenen Sollabstand 92 zum Referenzpunkt 102 und/oder der Referenzebene 10 mit der Vergleichseinheit 11 verbunden. Dabei ist der Einfachheit halber, in Fig.2 lediglich die Referenzebene 10 dargestellt.

Die Vergleichseinheit 11 kann entgegen der Darstellung auch in Form eines externen Moduls vorgesehen sein, welches beispielsweise drahtlos oder auch drahtgebunden mit der Lichtquelle 1 bzw. dem Ausrichtungssensor 41 und/oder dem Abstandssensor 42 verbunden ist.

Wie bereits einleitend erwähnt, ist abhängig von den jeweiligen zu erfüllenden Aufgaben der industrielle Bildverarbeitung eine genaue und vor allem reproduzierbare Positionierung der Lichtquelle 1 notwendig. Diese aufgabenabhängige Position wird unter anderem durch die Sollausrichtung 71 vorgegeben, wobei diese auf die Referenzausrichtung 51 bezogen ist. In Fig.2 ist dazu beispielhaft ein Sollwinkel β dargestellt. Natürlich sind in der, in Fig.2 gewählten Darstellung, die Referenzausrichtung 51, die tatsächliche Ausrichtung 61 und die Sollausrichtung 71, bzw. der entsprechenden Abweichungswinkel α und Sollwinkel β, lediglich beispielhaft für nur eine Raumebene dargestellt. Entsprechend der zu erfüllenden Aufgaben der industrielle Bildverarbeitung, bzw. je nach gegebener Einbausituation, kommen derartige, geometrische Zusammenhänge natürlich auch für weitere Raumebenen in Frage, weshalb natürlich auch durchaus mehrere Ausrichtungssensoren 41, Abstandssensoren 42 und entsprechende Referenzebenen 10 bzw. Referenzpunkte 102 vorgesehen sein können.

In Fig.2 ist die Lichtquelle 1, bzw. der damit verbundene Abstandssensor 42, in einem tatsächlichen Abstand 82 zur Referenzebene 10 dargestellt. Die Referenzebene 10 kann selbstverständlich beliebig gewählt werden und könnte entsprechend der Darstellung in Fig.2 beispielsweise durch die Oberfläche eines Wandelements oder eines beliebigen ortsfesten Bauteils gebildet werden. Natürlich können, wie bereits erwähnt, entsprechend der zur Verfügung stehenden Freiheitsgrade auch mehrere Abstandssensoren 42 und zugehörige Referenzebenen 10 vorgesehen sein.

Wie auch bereits im Vorfeld allgemein zum Sensor 40 erwähnt, können auch für den Ausrichtungssensor 41, bzw. für den Abstandssensor 42 eine Vielzahl bekannter Sensoren vorteilhaft genutzt werden, welche in unterschiedlichsten Varianten hinlänglich bekannt sind und aus diesem Grund an dieser Stelle nicht näher beschrieben werden.

In Fig.2 ist eine Differenz zwischen tatsächlicher Ausrichtung 61 und Sollausrichtung 71, bzw. Abweichungswinkel α und Sollwinkel β erkennbar. Ebenso weicht der tatsächliche Abstand 82 vom vorgegebenen Sollabstand 92 zur Referenzebene 10 ab. In Figur 2 ist daher eine Situation dargestellt bei deren Positionierung der Lichtquelle 1 keine optimale, bzw. erwünschte Beleuchtung des Bildbereichs 3 sichergestellt ist.

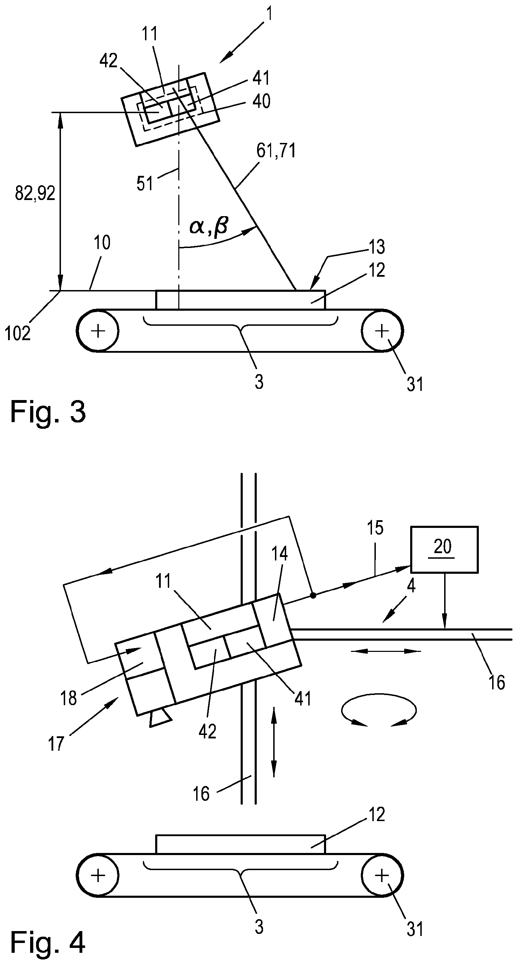

Hingegen zeigt Fig.3 die Lichtquelle 1 in der gewünschten Ausrichtung. Dabei fällt die tatsächliche Ausrichtung 61 und Sollausrichtung 71 zusammen, bzw. ergibt sich zwischen Abweichungswinkel α und Sollwinkel β keine Differenz. Weiters befindet sich ein Messobjekt 12 im Bildbereich 3 und zumindest ein Teil dessen Oberfläche 13 wird dabei als Referenzebene 10 genutzt. Dies erlaubt es den Abstand der Lichtquelle 1 zur Oberfläche 13 des Messobjekts 12, welches mithilfe der industriellen Bildverarbeitung bewertet werden soll, zu erfassen und ermöglicht die reproduzierbare Positionierung in Bezug auf das Messobjekt 12.

In der in Fig.3 gewählten Darstellung, ist auch der der tatsächliche Abstand 82 gleich dem vorgegebene Sollabstand 92 zur Referenzebene 10 bzw. dem Referenzpunkt 102. Im Gegensatz zu Fig.2 ist die Lichtquelle 1 für die industrielle Bildverarbeitung somit wie vorgesehen positioniert. Ein durch die Vergleichseinheit 11 durchgeführter Vergleich der Ausrichtungen 61 und 71 bzw. der Abstände 82 und 92 würden daher zu keiner Abweichung führen.

Erfindungsgemäß kann auch eine mit der Vergleichseinheit 11 verbundene Ausgabeeinheit 14, zur Ausgabe eines Vergleichsergebnisses 15 vorgesehen sein. Das Vergleichsergebnis 15 kann dabei nur aus Position passt oder passt nicht bestehen, kann aber auch Angaben zur jeweiligen Abweichung umfassen. Diese Ausgabeeinheit 14, welche lediglich schematisch in Fig.4 dargestellt ist, kann unterschiedlichste Ausführungsvarianten umfassen. Beispielsweise ist ein akustisches Signal denkbar, welches auf eine nicht optimale Positionierung der Leuchtquelle 1, wie es in Fig.2 dargestellt ist, hinweist. Ebenso ist natürlich eine optische Ausgabe des Vergleichsergebnisses 15 oder der Größe und Richtung der Abweichung denkbar. Eine derartige Visualisierung der Abweichung kann mittels LEDs, einem Display oder anderen Maßnahmen auf der Lichtquelle 1 selbst oder auf einer separaten Visualisierung in Sichtweite der Lichtquelle 1 erfolgen, um die manuelle Positionierung der Lichtquelle 1 zu erleichtern. Die Ausgabeeinheit 14 kann aber auch eine Datenkommunikationsschnittstelle umfassen, z.B. eine Anbindung an einen Datenbus, um das Vergleichsergebnis 15 über den Datenbus an eine übergeordnete Steuereinrichtung zu übertragen.

Besonders vorteilhaft könnte an der Montagevorrichtung 4 eine Positioniereinheit 16 vorgesehen sein, welche in Abhängigkeit des Vergleichsergebnisses 15 eine räumliche Positionierung der Lichtquelle 1 erlaubt. Die Positioniereinheit 16 ist lediglich beispielhaft durch ein Schienensystem und den entsprechenden translatorischen Bewegungsrichtungen in Form von Pfeilen in Fig.4 dargestellt, wobei die Positioniereinheit 16 natürlich auch rotatorische Bewegungen ermöglichen kann. Zur Positionierung kann eine Positionssteuereinheit 20 vorgesehen sein, die das Vergleichsergebnis 15 erhält und auswertet und die Positioniereinheit 16 ansteuert, um die unerwünschte Abweichung zwischen tatsächlichen relativen Lage 6 und der Solllage 7 auszugleichen, wie in Fig.4 angedeutet.

Weiters ist in Fig.4 schematisch angedeutet, dass mit der Lichtquelle 1 eine Kamera 17 zur industriellen Bildverarbeitung verbunden ist. Auf diese Weise kann auch für die Kamera 17 eines Systems zur industriellen Bildverarbeitung eine möglichst reproduzierbare Positionierung, durch Erfassung der tatsächlichen relativen Lage 6, der tatsächlichen Ausrichtung 61 und/oder einem tatsächlichen Abstand 82, zu einer Referenzebene 10 bzw. einem Referenzpunkt 102 gewährleistet werden.

Wie bereits erwähnt, können unterschiedlichste Sensorarten für den Sensor 40 zur Anwendung kommen. Bei der Kombination aus Lichtquelle 1 und Kamera 17, kann für die Bestimmung des tatsächlichen Abstands 82 beispielsweise ein Triangulationsverfahren anstelle eines Abstandssensors 42 genutzt werden. Dabei kann beispielsweise eine Laserquelle, welche mit der Lichtquelle 1 verbunden ist, in bekannter Weise einen Lichtpunkt im Bildbereich 3 erzeugen. Bei bekannten Abstand zwischen Kamera 17 und der Laserquelle kann durch das eben erwähnte Triangulationsverfahren der tatsächliche Abstand der Kombination aus Lichtquelle 1 und Kamera 17 zu einer Ebene im Bildbereich 3, bzw. zu einem Punkt innerhalb dieser, bestimmt werden. Natürlich kann es sich dabei um eine Referenzebene 10 bzw. einen Referenzpunkt 102 handeln.

Bei der erwähnten Kamera 17 zur industriellen Bildverarbeitung kann es sich natürlich auch um eine sogenannte "Smart Kamera" handeln. In bekannter Weise verfügt eine derartige "Smart Kamera" über einen eigenen, internen Prozessor, mittels welchem das durch die Kamera 17 erfasste Bild verarbeitet wird. In Folge wird von einer derartigen "Smart Kamera" üblicherweise nicht das Bild selbst ausgegeben und extern verarbeitet, sondern die darauf basierende Information, also ob beispielsweise ein bildlich aufgenommener Bauteil den Vorgaben entspricht oder nicht, oder wie groß ein Messwert ist. Natürlich kann auch die Bildaufnahme einer Smart Kamera ausgelesen werden, beispielsweise zur Archivierung der durch sie aufgenommenen Bilddaten. Auch kann eine Smart Kamera dazu genutzt werden, Daten auszugeben, beispielsweise über Bildaufnahme eines Barcodes oder ähnlichen. Wird in der Anmeldung von der Kamera 17 gesprochen, umfasst dies selbstverständlich auch eine "Smart Kamera".

Trägt nun beispielsweise das Vergleichsergebnis 15 die Information in sich, dass die tatsächliche Ausrichtung 6 der Kamera 17 und/oder der tatsächliche Abstand 82 zu einer Referenzebene 10 von der Sollausrichtung 71 und/oder dem Sollabstand 92 abweicht, ist damit zu rechnen, dass die generierten Bilddaten verfälscht sind. In diesem Falle würde das Messobjekt 12 z.B. verzerrt, vergrößert oder verkleinert dargestellt werden. Die in Fig.3 dargestellte Kamera 17 weist daher vorteilhaft eine Kompensationseinheit 18 auf. Mittels dieser Kompensationseinheit 18 können die von der Kamera 17 generierten Bilddaten zumindest in Abhängigkeit des Vergleichsergebnisses 15 manipuliert werden, um solche Verfälschungen auszugleichen.

Für das genannte Beispiel, bedeutet eine Manipulation, dass in Abhängigkeit des Vergleichsergebnisses 15 die Bilddaten vom erkannte Messobjekt 12 entsprechend entzerrt bzw. vergrößert oder verkleinert werden. Auf diese Weise wird beispielsweise ein zu kleiner oder zu großer tatsächlichen Abstand 82 zwischen der Kamera 17 und der Referenzebene 10 bzw. einem Referenzpunkt 102 ausgeglichen. Natürlich kann die eben beschriebene Manipulation der von der Kamera 17 erstellten Bilddaten auch in einer nachgelagerten Bildverarbeitung erfolgen, bzw. falls eine bereits erwähnte Smart Kamera zum Einsatz kommt, kann auch eine Manipulation der von der Smart Kamera gelieferten Ergebnisse erfolgen.

Auf diese Weise kann auf unterschiedliche Art die reproduzierbare Positionierung der Lichtquelle 1 für die industrielle Bildverarbeitung und damit verbundener Komponenten, wie beispielsweise einer Kamera 17, sichergestellt werden, um so z.B. eine möglichst zuverlässige Bewertung eines Messobjekts 12 zu erlauben.

## Patentansprüche

1. Lichtquelle (1) für die industrielle Bildverarbeitung zum Beleuchten eines Bildbereichs (3), **dadurch gekennzeichnet, dass** die Lichtquelle (1) zumindest einen Sensor (40) aufweist und der zumindest eine Sensor (40) zur Erfassung einer tatsächlichen relativen Lage (6) der Lichtquelle (1) in Bezug auf zumindest einen vorgegebenen ortsfesten Referenzpunkt (102) und/oder zumindest einer vorgegebenen ortsfesten Referenzebene (10) vorgesehen ist **und dass** eine mit dem Sensor (40) verbundene Vergleichseinheit (11) zum Vergleich der tatsächlichen relativen Lage (6) der Lichtquelle (1) mit einer vorgegebenen relativen Solllage (7) vorgesehen ist.

2. Lichtquelle (1) nach Anspruch 1, **dadurch gekennzeichnet, dass** der Sensor (40) zumindest einen Ausrichtungssensor (41) mit einer vorgegebenen Referenzausrichtung (51) umfasst, der Ausrichtungssensor (41) zur Erfassung einer tatsächlichen Ausrichtung (61) in Bezug auf die Referenzausrichtung (51) ausgebildet ist, **und dass** die Vergleichseinheit (11) zum Vergleich der tatsächlichen Ausrichtung (61) mit einer vorgegebenen Sollausrichtung (71) bezogen auf die Referenzausrichtung (51) vorgesehen ist.

3. Lichtquelle (1) nach Anspruch 1 oder 2, **dadurch gekennzeichnet, dass** der Sensor (40) zumindest einen Abstandssensor (42) umfasst und der Abstandssensor (42) zur Erfassung zumindest eines tatsächlichen Abstands (82) zu dem zumindest einen vorgegebenen ortsfesten Referenzpunkt (102) und/oder der zumindest einen vorgegebenen ortsfesten Referenzebene (10) vorgesehen ist **und dass** die Vergleichseinheit (11) zum Vergleich des tatsächlichen Abstandes (82) mit einem vorgegebenen Sollabstand (92) zum ortsfesten Referenzpunkt (102) und/oder der ortsfesten Referenzebene (10) vorgesehen ist.

4. Lichtquelle (1) nach einem der Ansprüche 1 bis 3, **dadurch gekennzeichnet, dass** sich im bestimmungsgemäßen Gebrauch der Lichtquelle (1) ein Messobjekt (12) im Bildbereich (3) befindet und zumindest ein Teil dessen Oberfläche (13) als ortsfeste Referenzebene (10) vorgesehen ist.

5. Lichtquelle (1) nach einem der Ansprüche 1 bis 4, **dadurch gekennzeichnet, dass** eine mit der Vergleichseinheit (11) verbundene Ausgabeeinheit (14), zur Ausgabe eines Vergleichsergebnisses (15) vorgesehen ist.

6. Lichtquelle (1) nach einem der Ansprüche 1 bis 5, **dadurch gekennzeichnet, dass** die Lichtquelle (1) mit einer Kamera (17) zur industriellen Bildverarbeitung verbunden ist.

7. Lichtquelle (1) nach Anspruch 6, **dadurch gekennzeichnet, dass** eine Kompensationseinheit (18) zur Manipulation der von der Kamera (17) generierten Bilddaten in Abhängigkeit des Vergleichsergebnisses (15) vorgesehen ist.

8. Lichtquelle (1) nach einem der Anspruch 1 bis 7, **dadurch gekennzeichnet, dass** zur räumlichen Positionierung der Lichtquelle (1) in Abhängigkeit des Vergleichsergebnisses (15) eine mit der Lichtquelle (1) verbundene Positioniereinheit (16) vorgesehen ist.

9. Verfahren zum Betreiben einer Lichtquelle (1) für die industrielle Bildverarbeitung zum Beleuchten eines Bildbereichs (3), **dadurch gekennzeichnet, dass** die Lichtquelle (1) zumindest einen Sensor (40) aufweist und der zumindest eine Sensor (40) eine tatsächliche relativen Lage (6) der Lichtquelle (1) in Bezug auf zumindest einen vorgegebenen ortsfesten Referenzpunkt (102) und/oder zumindest einer vorgegebenen ortsfesten Referenzebene (10) erfasst **und dass** eine mit Sensor (40) verbundene Vergleichseinheit (11) die tatsächliche relative Lage (6) der Lichtquelle (1) mit einer vorgegebenen relativen Solllage (7) vergleicht.

10. Verfahren nach Anspruch 9, **dadurch gekennzeichnet, dass** der Sensor (40) zumindest einen Ausrichtungssensor (41) mit einer vorgegebenen Referenzausrichtung (51) umfasst, der Ausrichtungssensor (41) eine tatsächliche Ausrichtung (61) in Bezug auf die Referenzausrichtung (51) erfasst, **und dass** die Vergleichseinheit (11) die tatsächlichen Ausrichtung (61) mit einer vorgegebenen Sollausrichtung (71) bezogen auf die Referenzausrichtung (51) vergleicht.

11. Verfahren nach Anspruch 9 oder 10, **dadurch gekennzeichnet, dass** der Sensor (40) zumindest einen Abstandssensor (42) umfasst und der Abstandssensor (42) zumindest einen tatsächlichen Abstand (82) zu dem zumindest einen vorgegebenen ortsfesten Referenzpunkt (102) und/oder der zumindest einen vorgegebenen ortsfesten Referenzebene (10) erfasst **und dass** die Vergleichseinheit (11) den tatsächlichen Abstand (82) mit einem vorgegebenen Sollabstand (92) zum ortsfesten Referenzpunkt (102) und/oder der ortsfesten Referenzebene (10) vergleicht.

12. Verfahren nach einem der Ansprüche 9 bis 11, **dadurch gekennzeichnet, dass** sich im bestimmungsgemäßen Gebrauch ein Messobjekt (12) im Bildbereich (3) befindet und zumindest ein Teil dessen Oberfläche (13) als ortsfeste Referenzebene (10) genutzt wird.

13. Verfahren nach einem der Ansprüche 9 bis 12, **dadurch gekennzeichnet, dass** ein Vergleichsergebnis (15) von einer mit der Vergleichseinheit (11) verbundenen Ausgabeeinheit (14) ausgegeben wird.

14. Verfahren nach einem der Ansprüche 9 bis 13, **dadurch gekennzeichnet, dass** eine Kamera (17) zur industriellen Bildverarbeitung mit der Lichtquelle (1) verbunden wird.

15. Verfahren nach Anspruch 14, **dadurch gekennzeichnet, dass** mittels einer Kompensationseinheit (18) von der Kamera (17) generierte Bilddaten zumindest in Abhängigkeit des Vergleichsergebnisses (15) manipuliert werden.

16. Verfahren nach einem der Ansprüche 9 bis 15, **dadurch gekennzeichnet, dass** die Lichtquelle (1) in Abhängigkeit des Vergleichsergebnisses (15) räumlich positioniert wird.

## Claims

1. Light source (1) for industrial image processing for illuminating an image area (3), **characterized in that** the light source (1) has at least one sensor (40) and the at least one sensor (40) is provided for capturing an actual relative position (6) of the light source (1) in relation to at least one predetermined reference point (102) and/or at least one predetermined reference plane (10) **and that** a comparison unit (11) connected to the sensor (40) is provided for comparing the actual relative position (6) of the light source (1) with a predetermined relative target position (7).

2. The light source (1) according to claim 1, **characterized in that** the sensor (40) comprises at least one orientation sensor (41) having a predetermined reference orientation (51), the orientation sensor (41) is designed for capturing an actual orientation (61) in relation to a reference orientation (51) **and that** the comparison unit (11) is provided for comparing the actual orientation (61) with a predetermined target orientation (71) relative to a reference orientation (51).

3. The light source (1) according to claim 1 or 2, **characterized in that** the sensor (40) comprises at least one distance sensor (42), and the distance sensor (42) is provided for capturing at least one actual distance (82) to the at least one predetermined reference point (102) and/or the at least one predetermined reference plane (10) **and that** the comparison unit (11) is provided for comparing the actual distance (82) with a predetermined target distance (92) to the reference point (102) and/or the reference plane (10).

4. The light source (1) according to one of the claims 1 to 3, **characterized in that** during normal use of the light source (1), a measurement object (12) is present in the image area (3) and at least part of the surface (13) thereof is provided as reference plane (10).

5. The light source (1) according to one of the claims 1 to 4, **characterized in that** an output unit (14) connected to the comparison unit (11) is provided for outputting a comparison result (15).

6. The light source (1) according to one of the claims 1 to 5, **characterized in that** the light source (1) is connected to a camera (17) for industrial image processing.

7. The light source (1) according to claim 6, **characterized in that** a compensation unit (18) is provided for manipulating the image data generated by the camera (17) depending on the comparison result (15).

8. The light source (1) according to one of the claims 1 to 7, **characterized in that** a positioning unit (16) connected to the light source (1) is provided for the spatial positioning of the light source (1) depending on the comparison result (15).

9. Method for operating a light source (1) for industrial image processing for illuminating an image area (3), **characterized in that** the light source (1) comprises at least one sensor (40) and the at least one sensor (40) captures an actual relative position (6) of the light source (1) in relation to at least one predetermined reference point (102) and/or at least one predetermined reference plane (10) **and that** a comparison unit (11) connected to the sensor (40) compares the actual relative position (6) of the light source (1) with a predetermined relative target position (7).

10. The method according to claim 9, **characterized in that** the sensor (40) comprises at least one orientation sensor (41) having a predetermined reference orientation (51), the orientation sensor (41) captures an actual orientation (61) in relation to a reference orientation (51) **and that** the comparison unit (11) compares the actual orientation (61) with a predetermined target orientation (71) relative to a reference orientation (51).

11. The method according to claim 9 or 10, **characterized in that** the sensor (40) comprises at least one distance sensor (42), and the distance sensor (42) captures at least one actual distance (82) to the at least one determined reference point (102) and/or the at least one predetermined reference plane (10) **and that** the comparison unit (11) compares the actual distance (82) with a predetermined target distance (92) to the reference point (102) and/or the reference plane (10).

12. The method according to one of the claims 9 to 11, **characterized in that** during normal use, a measurement object (12) is present in the image area (3) and at least part of the surface (13) thereof is used as reference plane (10).

13. The method according to one of the claims 9 to 12, **characterized in that** a comparison result (15) is output by an output unit (14) connected to the comparison unit (11).

14. The method according to one of the claims 9 to 13, **characterized in that** a camera (17) for industrial image processing is connected to the light source (1).

15. The method according to claim 14, **characterized in that** image data generated by the camera (17) are manipulated at least depending on the comparison result (15) using a compensation unit (18).

16. The method according to one of the claims 9 to 15, **characterized in that** the light source (1) is spatially positioned depending on the comparison result (15).

## Revendications

1. Source de lumière (1) pour le traitement d'image industriel pour l'éclairage d'une zone d'image (3), **caractérisée en ce que** la source de lumière (1) présente au moins un capteur (40) et l'au moins un capteur (40) est prévu pour la détection d'une position relative réelle (6) de la source de lumière (1) par rapport à au moins un point de référence (102) fixe prédéfini et/ou à au moins un plan de référence (10) fixe prédéfini, **et en ce qu'**une unité de comparaison (11) connectée au capteur (40) est prévue pour la comparaison de la position relative réelle (6) de la source de lumière (1) avec une position de consigne relative (7) prédéfinie.

2. Source de lumière (1) selon la revendication 1, **caractérisée en ce que** le capteur (40) comprend au moins un capteur d'orientation (41) comportant une orientation de référence (51) prédéfinie, le capteur d'orientation (41) est configuré pour la détection d'une orientation réelle (61) par rapport à l'orientation de référence (51), **et en ce que** l'unité de comparaison (11) est prévue pour la comparaison de l'orientation réelle (61) avec une orientation de consigne (71) prédéfinie par rapport à l'orientation de référence (51).

3. Source de lumière (1) selon la revendication 1 ou 2,
**caractérisée en ce que** le capteur (40) comprend au moins un capteur de distance (42) et le capteur de distance (42) est prévu pour la détection d'au moins une distance réelle (82) par rapport à l'au moins un point de référence (102) fixe prédéfini et/ou à l'au moins un plan de référence (10) fixe prédéfini **et en ce que** l'unité de comparaison (11) est prévue pour la comparaison de la distance réelle (82) avec une distance de consigne (92) prédéfinie par rapport au point de référence (102) fixe et/ou au plan de référence (10) fixe.

4. Source de lumière (1) selon l'une des revendications 1 à 3,
**caractérisée en ce que,** lors de l'utilisation conforme de la source de lumière (1), un objet de mesure (12) se trouve dans la zone d'image (3) et au moins une partie de la surface (13) de celui-ci est prévue comme plan de référence (10) fixe.

5. Source de lumière (1) selon l'une des revendications 1 à 4,
**caractérisée en ce qu'**une unité de sortie (14) connectée à l'unité de comparaison (11) est prévue pour la sortie d'un résultat de comparaison (15).

6. Source de lumière (1) selon l'une des revendications 1 à 5,
**caractérisée en ce que** la source de lumière (1) est connectée à une caméra (17) pour le traitement d'image industriel.

7. Source de lumière (1) selon la revendication 6,
**caractérisée en ce qu'**une unité de compensation (18) est prévue pour la manipulation des données d'image générées par la caméra (17) en fonction du résultat de comparaison (15).

8. Source de lumière (1) selon l'une des revendications 1 à 7,
**caractérisée en ce qu'**une unité de positionnement (16) connectée à la source de lumière (1) est prévue pour le positionnement spatial de la source de lumière (1) en fonction du résultat de comparaison (15).

9. Procédé permettant de faire fonctionner une source de lumière (1) pour le traitement d'image industriel pour l'éclairage d'une zone d'image (3),
**caractérisé en ce que** la source de lumière (1) présente au moins un capteur (40) et l'au moins un capteur (40) détecte une position relative réelle (6) de la source de lumière (1) par rapport à au moins un point de référence (102) fixe prédéfini et/ou à au moins un plan de référence (10) fixe prédéfini **et en ce qu'**une unité de comparaison (11) connectée au capteur (40) compare la position relative réelle (6) de la source de lumière (1) avec une position de consigne relative (7) prédéfinie.

10. Procédé selon la revendication 9, **caractérisé en ce que** le capteur (40) comprend au moins un capteur d'orientation (41) comportant une orientation de référence (51) prédéfinie, le capteur d'orientation (41) détecte une orientation réelle (61) par rapport à l'orientation de référence (51), **et en ce que** l'unité de comparaison (11) compare l'orientation réelle (61) avec une orientation de consigne (71) prédéfinie par rapport à l'orientation de référence (51).

11. Procédé selon la revendication 9 ou 10, **caractérisé en ce que** le capteur (40) comprend au moins un capteur de distance (42) et le capteur de distance (42) détecte au moins une distance réelle (82) par rapport à l'au moins un point de référence (102) fixe prédéfini et/ou à l'au moins un plan de référence (10) fixe prédéfini **et en ce que** l'unité de comparaison (11) compare la distance réelle (82) avec une distance de consigne (92) prédéfinie par rapport au point de référence (102) fixe et/ou au plan de référence (10) fixe.

12. Procédé selon l'une des revendications 9 à 11, **caractérisé en ce que,** lors de l'utilisation conforme, un objet de mesure (12) se trouve dans la zone d'image (3) et au moins une partie de la surface (13) de celui-ci est utilisée comme plan de référence (10) fixe.

13. Procédé selon l'une des revendications 9 à 12, **caractérisé en ce qu'**un résultat de comparaison (15) est sorti par une unité de sortie (14) connectée à l'unité de comparaison (11).

14. Procédé selon l'une des revendications 9 à 13, **caractérisé en ce qu'**une caméra (17) pour le traitement d'image industriel est connectée à la source de lumière (1).

15. Procédé selon la revendication 14, **caractérisé en ce que,** au moyen d'une unité de compensation (18), des données d'image générées par la caméra (17) sont manipulées au moins en fonction du résultat de comparaison (15).

16. Procédé selon l'une des revendications 9 à 15, **caractérisé en ce que** la source de lumière (1) est positionnée spatialement en fonction du résultat de comparaison (15).
